# EUROPÄISCHE PATENTANMELDUNG

(11) **EP 4 506 209 A1**
(43) Veröffentlichungstag der Anmeldung: **12.02.2025**
(21) Anmeldenummer: 24188806.4
(22) Anmeldetag: 16.07.2024
(51) Int. Cl.: B60N 2/00, B60N 2/20, B60N 2/64

(54) **FAHRZEUGSITZ**

(30) Priorität: 08.08.2023 DE 102023121073
(71) Anmelder: GRAMMER AG, 92289 Ursensollen (DE)
(72) Erfinder: WITTMANN, Hubert, 92685 Floß (DE)
(74) Vertreter: Hannke, Christian

(57) **Zusammenfassung**

Fahrzeugsitz (1), insbesondere für Nutzfahrzeuge, umfassend ein Sitzteil (2) und eine Rückenlehne (3), wobei der Fahrzeugsitz eine Vorrichtung zur Erkennung einer Sitzbelegung (4) aufweist, welche zumindest eine erste Detektionseinrichtung (5) und zumindest eine zweite Detektionseinrichtung (6) umfasst, wobei die zumindest eine erste Detektionseinrichtung geeignet und dazu bestimmt ist, eine Belegung des Sitzteils zu detektieren, wobei die zumindest eine zweite Detektionseinrichtung geeignet und dazu bestimmt ist, eine Belegung der Rückenlehne zu detektieren.

## Beschreibung

Die Erfindung betrifft einen Fahrzeugsitz, insbesondere für Nutzfahrzeuge, umfassend ein Sitzteil und eine Rückenlehne.

Derartige Nutzfahrzeuge sind beispielsweise Traktoren, Mähmaschinen, Gabelstapler und Baumaschinen. Oftmals sind diese Nutzfahrzeuge dazu eingerichtet, dass eine Funktion nur dann aktiviert ist oder bleibt, wenn sich ein Insasse auf dem Fahrzeugsitz befindet. Die ist aufgrund von Sicherheitsaspekten notwendig.

Aus dem Stand der Technik sind hierzu bereits Vorrichtungen zum Erkennen einer Sitzbelegung bekannt. Diese sind im Sitzteil des Fahrzeugsitz vorgesehen. Eine solche Vorrichtung zum Erkennen einer Sitzbelegung erkennt eine Sitzbelegung, wenn eine vorbestimmte Gewichtskraft auf diese wirkt. Während des Betriebs des Nutzfahrzeugs muss der Insasse, beziehungsweise Fahrer, sich oftmals nach hinten drehen, beispielsweise bei der Rückwärtsfahrt, der Ankopplung von Maschinen am Heck des Nutzfahrzeugs oder zur Sichtung von Funktionseinrichtungen, beispielsweise ein Mähwerk am Heck des Nutzfahrzeugs. Bei der Drehbewegung verlagert der Insasse Gewicht auf die Beine oder Stütz sich mit den Armen anderweitig ab. Somit wird die wirkende Gewichtskraft auf das Sitzteil beziehungsweise die Vorrichtung zum Erkennen des Sitzbelegung vermindert. Dies kann dazu führen, dass die Vorrichtung zum Erkennen einer Sitzbelegung den Sitz als nichtbelegt erkennt und ein entsprechendes Signal ausgibt. Moderne Nutzfahrzeuge stoppen bei einem entsprechenden "nicht belegt"-Signal unmittelbar. Diese "fälschliche" Detektion einer nicht vorhandenen Sitzbelegung wirkt sich nachteilig auf den Arbeitsfluss des Insassen aus.

Aufgabe der vorliegenden Erfindung ist es diesen Nachteil zu überwinden.

Die Aufgabe wird durch den Gegenstand des unabhängigen Anspruchs1 gelöst. Vorteilhafte Ausgestaltungen sind den Unteransprüchen zu entnehmen.

Kerngedanke der Erfindung ist ein Fahrzeugsitz, insbesondere für Nutzfahrzeuge, umfassend ein Sitzteil und eine Rückenlehne, wobei der Fahrzeugsitz eine Vorrichtung zur Erkennung einer Sitzbelegung aufweist, welche zumindest eine erste Detektionseinrichtung und zumindest eine zweite Detektionseinrichtung umfasst, wobei die zumindest eine erste Detektionseinrichtung geeignet und dazu bestimmt ist, eine Belegung des Sitzteils zu detektieren, wobei die zumindest eine zweite Detektionseinrichtung geeignet und dazu bestimmt ist, eine Belegung der Rückenlehne zu detektieren.

Die erfindungsgemäße Vorrichtung zur Erkennung einer Sitzbelegung detektiert somit sowohl eine Belegung des Sitzteil ist als auch eine Belegung der Rückenlehne. Das Risiko einer fehlerhaften Detektion aufgrund einer Reduktion, der auf das Sitzteil wirkenden Gewichtskraft wird somit reduziert.

Nach einer bevorzugten Ausführungsform gibt die Vorrichtung zur Erkennung einer Sitzbelegung einen Sitzbelegungszustand aus. Der Sitzbelegungszustand kann als "belegt" oder "nicht belegt" ausgegeben werden. Vorzugsweise wird lediglich dann der Sitzbelegungszustand als nicht belegt ausgegeben, wenn die zumindest eine erste Detektionseinrichtung und die zumindest eine zweite Detektionseinrichtung jeweils keine Belegung detektieren. Vorzugsweise wird durch die Vorrichtung zur Erkennung einer Sitzbelegung die Ausgabe, der zumindest einen ersten Detektionseinrichtung und der zumindest einen zweiten Detektionseinrichtung verknüpft. Bei einer Drehung des Fahrzeugführers in dem Fahrzeugsitz kann die auf die zumindest eine erste Detektionseinrichtung wirkende Gewichtskraft vermindert sein, so dass diese keine Belegung erkennt. Allerdings wird weiterhin durch die zumindest eine zweite Detektionseinrichtung eine Belegung der Rückenlehne erkannt. Der ausgegebene Sitzbelegungszustand ist somit weiterhin belegt. Durch das Vorsehen zumindest einer zweiten Detektionseinrichtung zu Detektion einer Belegung der Rückenlehne und durch die entsprechende Verknüpfung der Ausgangssignale der beiden Detektionseinrichtungen wird somit eine fehlerhafte Ausgabe einer Nichtbelegung des Sitzes bei einer Drehung des Insassen vermieden.

Nach einer bevorzugten Ausführungsform gibt die zumindest eine erste Detektionseinrichtung bei einer Belegung ein erstes Signal aus. Vorzugsweise gibt die zumindest eine zweite Detektionseinrichtung bei einer Belegung ein zweites Signal aus. Vorzugsweise gibt die zumindest eine erste Detektionseinrichtung bei einer Nichtbelegung ein zweites Signal aus. Vorzugsweise gibt die zumindest eine zweite Detektionseinrichtung bei einer Nichtbelegung ein zweites Signal aus. Vorzugsweise ist das zweite Signal ein spezifiziertes Signal. Denkbar wäre jedoch auch dass das zweite Signal lediglich die Abwesenheit des ersten Signals ist.

Vorteilhafterweise sind die zumindest eine erste Detektionseinrichtung und die zumindest eine zweite Detektionseinrichtung signaltechnisch parallel geschalteten. Vorzugsweise sind die zumindest eine erste Detektionseinrichtung und die zumindest eine zweite Detektionseinrichtung mittels einer logischen ODER-Verknüpfung verknüpft. Sowohl die Parallelschaltung als auch die ODER-Verknüpfung liefern eine gleiche Ausgabe. Geben sowohl die zumindest eine erste Detektionseinrichtung als auch die zumindest eine zweite Detektionseinrichtung eine Belegung aus, gilt der Fahrzeugsitz als belegt. Geben die zumindest eine erste Detektionseinrichtung oder die zumindest eine zweite Detektionseinrichtung eine Nichtbelegung, gleichzeitig jedoch die jeweils andere Detektionseinrichtung eine Belegung aus, gilt der Fahrzeugsitz ebenso als belegt. Lediglich wenn sowohl die zumindest eine erste Detektionseinrichtung als auch die zumindest eine zweite Detektionseinrichtung eine Nichtbelegung ausgeben, gilt der Fahrzeugsitz als nicht belegt. Die nachfolgende Tabelle zeigt die genannten vorteilhaften Ausgaben:

| Ausgabe der zumindest einen ersten Detektionseinrichtung | Ausgabe der zumindest einen zweiten Detektionseinrichtung | Ausgabe der Vorrichtung zur Erkennung einer Sitzbelegung |
|---|---|---|
| belegt | belegt | belegt |
| belegt | nicht belegt | belegt |
| nicht belegt | belegt | belegt |
| nicht belegt | nicht belegt | nicht belegt |

Nach einer besonders bevorzugten Ausführungsform umfasst das Sitzteil ein Rahmenelement und/oder ein plattenartiges Element, auf oder an welchen zumindest ein Sitzpolster angeordnet ist. Das Rahmenelement und/oder das plattenartige Element können dabei beliebig ausgestaltet sein. Die Rückenlehne umfasst vorzugsweise ebenso ein Rahmenelement, auf oder an welchen zumindest Polsterelement angeordnet ist. Vorzugsweise ist die Höhe der Rückenlehne derart, dass lediglich eine Abstützung im Lendenwirbelbereich und/oder im unteren Schulterbereich erfolgt. Die Rückenlehne reicht demnach vorzugsweise nicht bis zum oberen Schulterbereich der Person in dem Sitz und umfasst keine Kopfstütze. Derartige "halb hohe" Rückenlehnen sind oft in Nutzfahrzeugen vorgesehen, bei welchen der Insasse, beziehungsweise Fahrer oftmals seinen Blick nach hinten richten muss. Dies sind beispielsweise Traktoren, Baumaschinen oder Ähnliches.

Nach einer weiteren bevorzugten Ausführungsform ist die zumindest eine erste Detektionseinrichtung in oder an dem Sitzteil angeordnet. Vorzugsweise ist die zumindest eine zweite Detektionseinrichtung in oder an der Rückenlehne angeordnet. Die beiden Detektionseinrichtungen können vorteilhafterweise unterschiedliche individuelle Detektionselemente aufweisen.

Nach einer weiteren bevorzugten Ausführungsform umfasst die zumindest eine erste Detektionseinrichtung zumindest einen ersten Sensor, welcher geeignet und dazu bestimmt ist, eine Belegung des Sitzteils zu detektieren. Vorzugsweise ist der erste Sensor ausgewählt aus der Gruppe: ein mechanischer Sensor, ein Drucksensor, ein kapazitiver Sensor, ein induktiver Sensor, ein optischer Sensor, ein Air-flow-Sensor, ein Temperatursensor, ein Ultraschall-Abstandssensor ein elektromagnetischer Sensor, beispielsweise Lidar oder Radar. Denkbar wären selbstverständlich auch noch weitere geeignete Sensoren.

Vorzugsweise ist der zumindest eine erste Sensor auf einem ersten Mattenelement angeordnet. Vorteilhafterweise umfasst der Fahrzeugsitz zumindest ein erstes Mattenelement mit zumindest einem ersten Sensor. Vorzugsweise ist das zumindest eine erste Mattenelement mit mehreren ersten Sensoren ausgestattet. Vorzugsweise sind die ersten Sensoren in vorbestimmten Abständen über die gesamte Fläche des ersten Mattenelements verteilt angeordnet. Vorteilhafterweise kann das zumindest eine erste Mattenelement auf, in oder unter dem Polsterelement des Sitzteils angeordnet sein.

Nach einer weiteren bevorzugten Ausführungsform umfasst die zumindest eine zweite Detektionseinrichtung zumindest einen zweiten Sensor, welcher geeignet und dazu bestimmt ist, eine Belegung der Rückenlehne zu detektieren, wobei der zweite Sensor ausgewählt sind aus der Gruppe: ein mechanischer Sensor, ein Drucksensor, ein kapazitiver Sensor, ein induktiver Sensor, ein optischer Sensor, ein Air-flow-Sensor, ein Temperatursensor, ein Ultraschall-Abstandssensor ein elektromagnetischer Sensor, beispielsweise Lidar oder Radar. Denkbar wären selbstverständlich auch noch weitere geeignete Sensoren.

Vorzugsweise ist der zumindest eine zweite Sensor auf einem zweiten Mattenelement angeordnet. Vorteilhafterweise umfasst der Fahrzeugsitz zumindest ein zweites Mattenelement mit zumindest einem zweiten Sensor. Vorzugsweise ist das zumindest eine zweite Mattenelement mit mehreren zweiten Sensoren ausgestattet. Vorzugsweise sind die zweiten Sensoren in vorbestimmten Abständen über die gesamte Fläche des zweiten Mattenelements verteilt angeordnet. Vorteilhafterweise kann das zumindest eine zweite Mattenelement auf, in oder unter dem Polsterelement der Rückenlehne angeordnet sein.

Der zumindest eine erste Sensor und der zumindest eine zweite Sensor sind jeweils ein Detektionselement der jeweiligen Detektionseinrichtung.

Nach einer weiteren bevorzugten Ausführungsform umfasst die zumindest eine erste Detektionseinrichtung und/oder die zumindest eine zweite Detektionseinrichtung zumindest ein erstes Schaltelement. Vorzugsweise ist das erste Schaltelement ein mechanisches Schaltelement. Vorzugsweise wirkt durch die Belegung (der Rückenlehne oder des Sitzteils) eine Gewichtskraft auf das zumindest eine erste Schaltelement, wodurch das zumindest eine erste Schaltelement von einem ersten Schaltzustand in einen zweiten Schaltzustand bringbar ist. Vorzugsweise wird das mechanische, zumindest eine erste Schaltelement bei einer Belegung von einem ersten Schaltzustand in einen zweiten Schaltzustand verlagert. Vorzugsweise wird bei einer Belegung eine Gewichtskraft auf das mechanische zumindest eine erste Schaltelement ausgeübt. Die Belegung ist vorzugsweise ein direkter oder indirekter Kontakt des zumindest einen ersten Schaltelements mit dem Körper des Insassen. Ein solches erstes Schaltelement ist ein einfach ausgestaltetes und kostengünstig herzustellendes Bauteil, mittels welchem eine Belegungserkennung erzielt werden kann. Das zumindest eine erste Schaltelement ist ein Detektionselement der jeweiligen Detektionseinrichtung.

Nach einer weiteren bevorzugten Ausführungsform umfasst die zumindest eine erste Detektionseinrichtung und/oder die die zumindest eine zweite Detektionseinrichtung ein schwenkbar angeordnetes stangenartiges Element. Vorteilhafterweise ist das stangenartige Element bügelartig ausgebildet. Vorzugsweise ist das stangenartige Element unter oder in einem Polsterelement der Rückenlehne beziehungsweise des Sitzteils angeordnet. Vorzugsweise umfasst die Rückenlehne beziehungsweise das Sitzteil zumindest ein Lagerungselement, vorzugsweise zwei Lagerungselemente, welche das stangenartige Element lagern. Das zumindest eine Lagerungselement kann an dem Rückenlehnenrahmen, dem Sitzteilrahmen oder dem plattenartigen Element des Sitzteils angeordnet sein.

Vorzugsweise ist ein Vorspannelement vorgesehen, welches das stangenartige Element in einer ersten Position hält. Das Vorspannelement kann vorzugsweise ein Federelement beispielsweise eine Zug- oder Druckfeder oder auch ein elastisches Element sein.

Vorzugsweise ist ein zweites Schaltelement vorgesehen, welches mit dem stangenartigen Element in Wirkkontakt steht. Durch eine Belegung (der Rückenlehne beziehungsweise des Sitzteils) wird vorzugsweise eine Kraft auf das stangenartige Element ausgeübt, wodurch das stangenartige Element, aufgrund des Wirkkontakts zu einer zweiten Position verlagert. Vorteilhafterweise wird durch diese Verlagerung das zweite Schaltelement ebenso verlagert und kontaktiert hierdurch ein Kontaktelement. Die Belegung übt vorteilhafterweise eine Kraft auf das stangenartige Element aus, so dass dieses gegen die Kraft des Vorspannelements verlagert wird.

Nach einer weiteren bevorzugten Ausführungsform ist die Rückenlehne mittels zweier Beschläge an dem Sitzteil angeordnet. Bevorzugt ist die Rückenlehne relativ zu dem Sitzteil verschwenkbar. Vorteilhafterweise umfasst zumindest einer der Beschläge ein elastisches Element, dessen elastische Kraft der Verschwenkung entgegenwirkt. Es wird somit eine gewisse Federung der Rückenlehne ermöglicht. Denkbar wäre auch, dass die Neigung der Rückenlehne durch eine Einstellungseinrichtung in zumindest einem der Beschläge einstellbar beziehungsweise arretierbar ist.

Vorzugsweise ist die zumindest eine zweite Detektionseinrichtung, welche eine Belegung der Rückenlehne detektiert, in oder an zumindest einem der beiden Beschläge angeordnet. Vorzugsweise ist somit eine Belegung der Rückenlehne aufgrund einer Verschränkung dieser relativ zu dem Sitzteil detektierbar. Dies kann beispielsweise durch ein Schaltelement, welches mit dem elastischen Element gekoppelt ist. erreicht werden. Bei Belegung der Rückenlehne wird diese zumindest um einen geringen Weg relativ zu dem Sitzteil verschwenkt. Bei einer solchen Verschwenkung erfolgt ein Übergang des Schaltelements in den Schaltzustand der die Belegung der Rückenlehne kennzeichnet. Alternativ oder kumulativ könnte die zumindest eine zweite Detektionseinrichtung eine Messeinrichtung umfassen, welche ein Drehmoment in zumindest einem der beiden Beschläge detektiert. Das Drehmoment wird dabei durch die Verschränkung der Rückenlehne relativ zu dem Sitzteil erzeugt. Nach der Detektion eines Überschreitens eines vorgegebenen Schwellwerts des Drehmoments wird die Rückenlehne als belegt erkannt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: einen Fahrzeugsitz nach einer Ausführungsform;
- Fig. 2: ein Prinzipschaltbild der Vorrichtung zur Erkennung einer Sitzbelegung nach einer Ausführungsform;
- Fig. 3: einen Fahrzeugsitz mit einer Vorrichtung zur Erkennung einer Sitzbelegung nach einer Ausführungsform;
- Fig. 4: einen Fahrzeugsitz mit einer Vorrichtung zur Erkennung einer Sitzbelegung nach einer Ausführungsform;
- Fig. 5: einer Detektionseinrichtung nach einer Ausführungsform;
- Fig. 6: einen Fahrzeugsitz mit einer Vorrichtung zur Erkennung einer Sitzbelegung nach einer Ausführungsform.

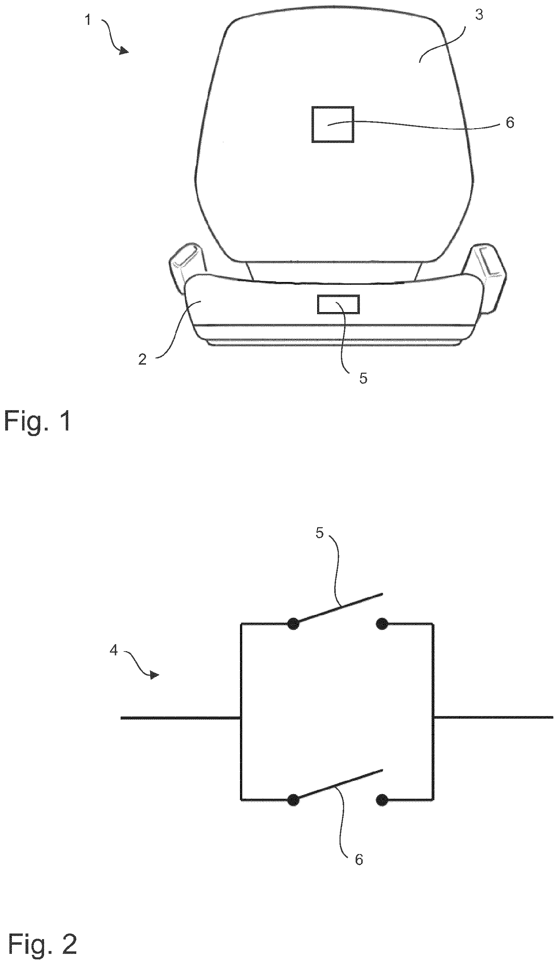

In Figur 1 ist ein Fahrzeugsitz, insbesondere für Nutzfahrzeuge, umfassend ein Sitzteil 2 und eine Rückenlehne 3 dargestellt. Der Fahrzeugsitz 1 weist eine Vorrichtung zur Erkennung eines Sitzbelegung 4 auf. Diese Vorrichtung umfasst zumindest eine erste Detektionseinrichtung 5 und zumindest eine zweite Detektionseinrichtung 6, wobei die zumindest eine erste Detektionseinrichtung 5 geeignet dazu bestimmt ist, eine Belegung des Sitzteils 2 zu detektieren, wobei die zumindest eine zweite Detektionseinrichtung 6 geeignet und dazu bestimmt ist, eine Belegung der Rückenlehne 3 zu detektieren.

In Figur 2 ist ein Prinzipschaltbild der Vorrichtung zur Erkennung einer Sitzbelegung 4 dargestellt. Die beiden Detektionseinrichtungen 5, 6 sind als parallel geschaltete Schaltelemente prinzipiell dargestellt. Die beiden Detektionseinrichtungen 5, 6 können, wie dargestellt, signaltechnisch parallel verschalten sein. Dies wäre anwendbar, wenn die Detektionseinrichtungen 5, 6 entsprechende Schalteinrichtungen umfassen. Denkbar wäre jedoch auch eine logische Verknüpfung in Form einer ODER-Verknüpfung. Dies wäre vorzuziehen, wenn die Detektionseinrichtungen Detektionselement in Form von Sensoren umfassen. Die Parallelschaltung und die ODER-Verknüpfung würden jedoch zum gleichen Verhalten führen.

Die Vorrichtung zur Erkennung einer Sitzbelegung 4 gibt einen Sitzbelegungszustand aus beziehungsweise ein Signal entsprechend eines Sitzbelegungszustands. Der Sitzbelegungszustand kann als belegt und nicht belegt ausgegeben werden. Es gibt somit je lediglich zwei Zustände, welche von der Vorrichtung zur Erkennung einer Sitzbelegung 4 ausgegeben werden. Eine solche Ausgabe wird von einer Steuereinrichtung des Nutzfahrzeugs entsprechend ausgewertet. Beispielsweise kann bei einer Nichtbelegung des Fahrzeugsitzes, das Nutzfahrzeug gestoppt werden. Vorliegend gibt die Vorrichtung zur Erkennung einer Sitzbelegung 4 lediglich dann einen Sitzbelegungszustand als nicht belegt aus, wenn durch die zumindest eine erste Detektionseinrichtung 5 und durch die zumindest eine zweite Detektionseinrichtung 6 jeweils eine Nichtbelegung detektiert wird.

Die zumindest eine erste Detektionseinrichtung sowie die zumindest eine zweite Detektionseinrichtung können die Belegung auf verschiedene Art und Weise ausgeben. Bei einer Belegung gibt die zumindest eine erste Detektionseinrichtung 5 ein erstes Signal aus. Bei einer Nichtbelegung kann ein entsprechend definiertes Signal ausgegeben werden oder aber auch das Ausbleiben des erste Signals als Nichtbelegungssignal entsprechend ausgewertet werden. Die zumindest eine zweite Detektionseinrichtung gibt bei einer Belegung ein zweites Signal aus. Auch bei der zumindest einen zweiten Detektionseinrichtung kann bei Nichtbelegung ein entsprechend definiertes Signal ausgegeben werden, oder aber das Ausbleiben des zweiten Signals als Nichtbelegungssignal entsprechend gewertet werden.

Durch die Auswertung einer Belegung sowohl des Sitzteils als auch der Rückenlehne kann verhindert werden, dass eine fälschliche Ausgabe des Sitzbelegung durch eine reduzierte Gewichtskrafteinwirkung auf die erste Detektionseinrichtung 5 im Sitzteil 2 zu einer Ausgabe einer Nichtbelegung führt.

Die zumindest eine erste Detektionseinrichtung 5 kann in oder an dem Sitzteil 2 angeordnet sein. Ebenso kann die zumindest eine zweite Detektionseinrichtung 6 in oder an der Rückenlehne 3 angeordnet sein. Die Detektionseinrichtungen 5, 6 können dabei unterschiedlich ausgestaltet sein. Die Detektionseinrichtung können 5, 6 dabei Detektionselement in Form von mechanischen Schaltelementen, elektrischen Schaltelementen oder aber auch in Form von diversen Sensoren, welche eine Belegung des Sitzteils 2 beziehungsweise der Rückenlehne 3 detektieren können, umfassen. Eine Belegung ist in diesem Fall ein Anliegen des Körpers des Insassen an dem Sitzteil 2 beziehungsweise der Rückenlehne 3. Eine Belegung kann aber auch ein Krafteintrag durch den Körper des Insassen in das Sitzteil 3 beziehungsweise in die Rückenlehne 3 sein.

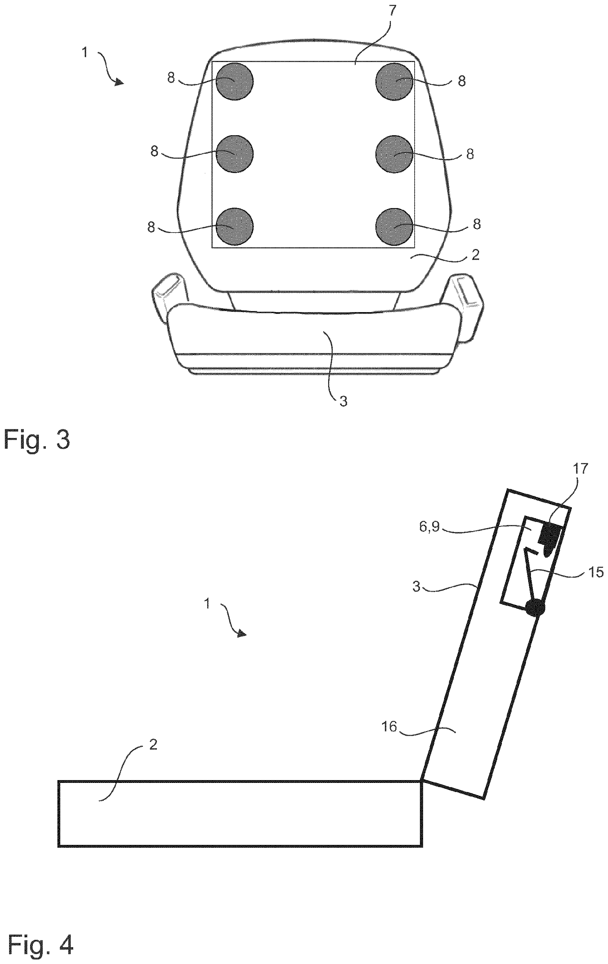

In den Figuren 3-6 sind verschiedene Ausführungsformen dargestellt, wie eine zweite Detektionseinrichtung 6 ausgestaltet sein kann. In diesen Ausführungsformen der Figuren 3-6 ist die Ausgestaltung der ersten Detektionseinrichtung 5 nicht explizit spezifiziert. Die erste Detektionseinrichtung 5 kann selbstverständlich entsprechend analog zu der zweiten Detektionseinrichtung 6 ausgestaltet sein. Auch können mehrere erste Detektionseinrichtungen 5 und/oder mehrere zweite Detektionseinrichtungen 6 vorgesehen sein. Denkbar sind beliebige Kombinationen der zumindest einen ersten Detektionseinrichtung 5 und der zumindest einen zweiten Detektionseinrichtung 6.Denkabar wären auch das Vorsehen von Detektionseinrichtungen, welche anderweitig als in den Figuren 3-6 dargestellt ausgebildet sind.

In Figur 3 eine zweite Detektionseinrichtung 6 dargestellt, welche ein zweites Mattenelement 7 umfasst. Das zweite Mattenelement 7 weist zumindest einen zweiten Sensor 8 auf. Vorliegend sind 6 zweite Sensoren 8 vorgesehen, welche in vorgegebenen Abständen auf dem zweiten Mattenelement 7 verteilt angeordnet sind. Die zweiten Sensoren 8 sind dazu geeignet und dafür vorgesehen, eine Belegung der Rückenlehne 3 zu detektieren. Hierzu können verschiedene Arten von Sensoren verwendet werden.

Beispielsweise ein Drucksensor, welcher einen Druck hervorgerufen durch die Gewichtskraft des Körpers des Insassen detektiert.

Denkbar wäre auch die Verwendung eines kapazitiven Sensors. Ein kapazitiver Sensor ist ein Sensor, welcher auf Basis der Veränderung der elektrischen Kapazität eines einzelnen Kondensators oder eines Kondensatorsystems arbeitet. Die Beeinflussung der Kapazität durch die zu erfassende Größe kann dabei auf verschiedene Arten erfolgen. Beispielsweise kann eine Elektrode relativ zu einer anderen durch eine Druckbewegung bewegt werden. Ein kapazitiver Sensor kann jedoch auch als eine Art Näherungsschalter ausgebildet sein, dessen Funktion auf der Änderung des elektrischen Feldes in der Umgebung vor seiner Sensorelektrode beruht.

Denkbar wäre auch die Verwendung eines optischen Sensors. Ein optischer Sensor kann beispielsweise eine Lichtquelle, welche sichtbares oder aber auch infrarotes Licht sendet, und einen Detektor umfassen. Detektiert wird eine Veränderung der Reflektion beziehungsweise der Lichtmenge durch den Körper des Insassen.

Weitere denkbare Arten von Sensoren sind: ein mechanischer Sensor, ein induktiver Sensor, Air-flow Sensor, ein Temperatursensor, ein Ultraschall Abstandssensor oder ein elektromagnetischer Sensor, beispielsweise LIDAR oder RADAR. Die Sensoren geben ein entsprechendes Signal aus, welches dann mit einem Signal der ersten Detektionseinrichtung 5 wird. Das resultierende Signal wird dann an eine Steuereinrichtung des Fahrzeugs weitergegeben.

Die zumindest eine erste Detektionseinrichtung kann selbstverständlich in analoger Weise ebenso mit einem ersten Mattenelement ausgestattet sein, welches zumindest einen ersten Sensor umfasst, der dazu geeignet und bestimmt ist, eine Belegung des Sitzteil 2 zu detektieren. Der erste Sensor kann in analoger Weise zu dem zweiten Sensor ausgebildet sein.

Die zumindest eine erste Detektionseinrichtung 5 und/oder die zumindest eine zweite Detektionseinrichtung 6 können auch zumindest ein erstes Schaltelement 9 umfassen, welches vorzugsweise als mechanisches Schaltelement ausgebildet sein kann. Durch die Belegung wirkt eine Gewichtskraft durch den Körper des Insassen auf das zumindest eine erste Schaltelement 9, wodurch das zumindest eine erste Schaltelement 9 von einem ersten Schaltzustand in einen zweiten Schaltzustand bringbar ist..

Ein entsprechendes Beispiel ist in Figur 4 dargestellt. Hier ist in der Rückenlehne 3 eine zweite Detektionseinrichtung 6 vorgesehen, welche ein mechanisches Schaltelement 9 umfasst. Das mechanische Schaltelement 9 umfasst ein Wippenelement 15, welches schwenkbar an einem Rahmenelement der Rückenlehne 3 angeordnet ist. Vorzugsweise ist dieses Wippenelement 15 hinter einem oder in einem Polsterelement 16 der Rückenlehne 3 angeordnet. Durch die Gewichtskraft des Insassen wird das Polsterelement 16 deformiert und somit das Wippenelement 15 derart verschwenkt, dass dieses ein Kontaktelement 17 kontaktiert. Durch diesen Kontakt wird das Schaltelement 9 geschlossen und ein entsprechendes Signal ausgegeben, welches mit einem Signal der ersten Detektionseinrichtung verknüpft wird.

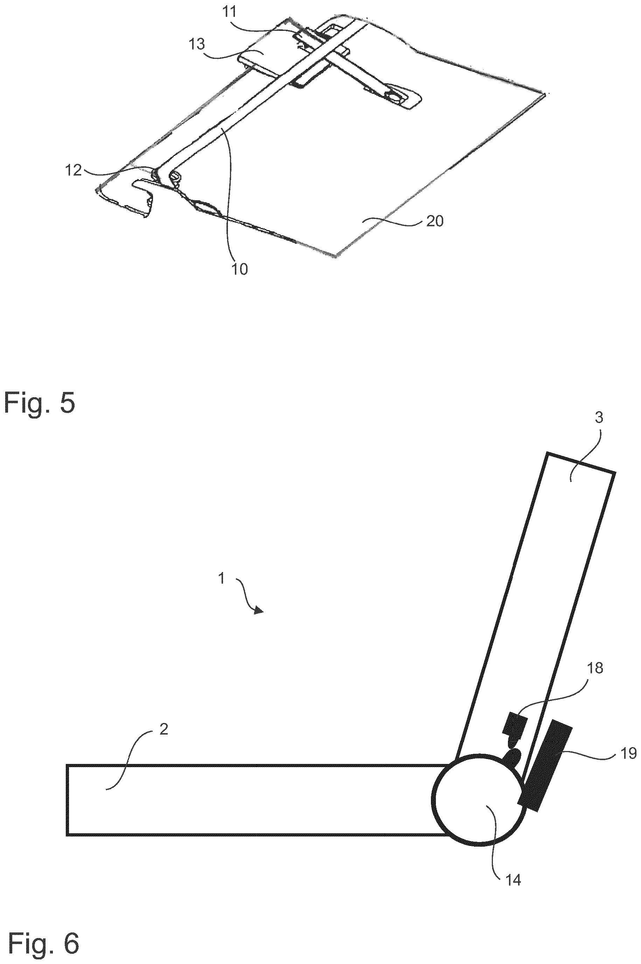

Eine weitere Ausgestaltung einer ersten 5 und/oder zweiten Detektionseinrichtung 6 ist in Figur 5 dargestellt. Die jeweilige Detektionseinrichtung 5, 6 umfasst ein schwenkbar angeordnetes stangenartiges Element 10. Dieses stangenartige Element 10 ist bügelartig ausgestaltet und schwenkbar an einem Unterbau des Sitzteils 2 oder der Rückenlehne3 angeordnet ein. Weiterhin ist ein Vorspannelement 12 vorgesehen, welches das stangenartige Element 10 in einer ersten Position hält. Das stangenartige Element 10 ist ferner in Wirkkontakt mit einem zweiten Schaltelement 11. Weiterhin ist ein plattenartiges Element 20 vorgesehen, an welchem stangenartige Element 10, das Vorspannelement 12, das Schaltelement 11 und ein Kontaktelement 13 angeordnet sind.

Durch einen Krafteintrag aufgrund einer Belegung wird das stangenartige Element 10 gegen die Kraft des Vorspannelements 12 nach unten verlagert. Ebenso wird durch diese Verlagerung gleichzeitig das Schaltelement 11 mitgenommen beziehungsweise verlagert. Aufgrund der Verlagerung kontaktiert das Schaltelement 11 ein plattenartig ausgebildetes Kontaktelement 13. Durch diesen Kontakt wird ein entsprechendes Signal ausgegeben, welches mit dem Signal der jeweilig anderen Detektionseinrichtung 5, 6 verknüpft wird.

Im Falle der zweiten Detektionseinrichtung 6 erstreckt sich vorzugsweise das stangenartige Element 10 über die gesamte oder annähernd die gesamte Breite des Rückenteils 3 Im Falle der ersten Detektionseinrichtung 5 erstreckt sich vorzugsweise das stangenartige Element 10 über die gesamte oder annähernd die gesamte Breite des Sitzteils 2. Somit wird eine über die komplette Breite des Sitzteils 2 oder der Rückenlehne 3 eine Detektionsfähigkeit gewährleistet.

Nach einer weiteren Ausführungsform ist die Rückenlehne 3 mittels zweier Beschläge 14 an dem Sitzteil 2 angeordnet. Die Rückenlehne 3 ist relativ zu dem Sitzteil 2 verschwenkbar. Zumindest ein Beschlag 14 umfasst ein elastisches Element, dessen elastische Kraft der Verschwenkung entgegenwirkt. Der Beschlag 14 kann weiterhin eine Stelleinrichtung und/oder eine Arretierungseinrichtung für eine Neigungsposition der Rückenlehne 3 umfassen (in den Figuren nicht gezeigt). Die zumindest eine zweite Detektionseinrichtung 6 kann in oder an zumindest einem Beschlag14 angeordnet sein. Eine Belegung der Rückenlehne 3 aufgrund einer Verschwenkung dieser relativ zu dem Sitzteil 2 kann somit detektiert werden. Die zweite Detektionseinrichtung 6 kann ein drittes Schaltelement 18 und ein drittes Kontaktelement 19 umfassen. Das dritte Schaltelement 18 kann mit dem elastischen Element des Beschlags 14 gekoppelt sein und bei einer Verschwenkung, welche durch den Krafteintrag des Körpers des Insassen bedingt ist, derart verlagert werden oder verschwenkt werden, dass dieses mit dem dritten Kontaktelement 19 in Kontakt tritt. Durch einen derartigen Kontakt wird ein entsprechendes ist Signal ausgegeben, welches mit dem Signal der jeweilig anderen Detektionseinrichtung 5, 6 verknüpft wird.

Eine weitere Möglichkeit eine zweite Detektionseinrichtung in einem Beschlag 14 zu realisieren ist, eine Messeinrichtung für ein Drehmoment, welches durch die Verlagerung aufgrund der Belegung erzeugt wird, vorzusehen. Diese Messeinrichtung gibt ein Signal aus, sobald ein Überschreiten eines Schwellenwerts des Drehmoments detektiert wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeugsitz
- 2: Sitzteil
- 3: Rückenlehne
- 4: Vorrichtung zur Erkennung des Sitzbelegung
- 5: erste Detektionseinrichtung
- 6: zweite Detektionseinrichtung
- 7: Mattenelement
- 8: zweiter Sensor
- 9: erstes Schaltelement
- 10: stangenartiges Element
- 11: zweites Schaltelement
- 12: Vorspannelement
- 13: Kontaktelement
- 14: Beschlag
- 15: Wippenelement
- 16: Polsterelement
- 17: Kontaktelement
- 18: drittes Schaltelement
- 19: drittes Kontaktelement
- 20: plattenartiges Element

## Patentansprüche

1. Fahrzeugsitz (1), insbesondere für Nutzfahrzeuge, umfassend ein Sitzteil (2) und eine Rückenlehne (3),
**dadurch gekennzeichnet, dass**
der Fahrzeugsitz (1) eine Vorrichtung zur Erkennung einer Sitzbelegung (4) aufweist, welche zumindest eine erste Detektionseinrichtung (5) und zumindest eine zweite Detektionseinrichtung (6) umfasst, wobei die zumindest eine erste Detektionseinrichtung (5) geeignet und dazu bestimmt ist, eine Belegung des Sitzteils (2) zu detektieren, wobei die zumindest eine zweite Detektionseinrichtung (6) geeignet und dazu bestimmt ist, eine Belegung der Rückenlehne (3) zu detektieren.

2. Fahrzeugsitz (1) nach Anspruch 1,
**dadurch gekennzeichnet, dass**
die Vorrichtung zur Erkennung einer Sitzbelegung (4) einen Sitzbelegungszustand ausgibt, wobei lediglich dann der Sitzbelegungszustand als nicht belegt ausgegeben wird, wenn durch die zumindest eine erste Detektionseinrichtung (5) und durch die zumindest eine zweite Detektionseinrichtung (6) jeweils eine Nichtbelegung detektiert wird.

3. Fahrzeugsitz (1) nach Anspruch 1 oder 2,
**dadurch gekennzeichnet, dass**
die zumindest eine erste Detektionseinrichtung (5) bei einer Belegung ein erstes Signal ausgibt, wobei die zumindest eine zweite Detektionseinrichtung (6) bei einer Belegung ein zweites Signal ausgibt, wobei die zumindest eine erste Detektionseinrichtung (5) und die zumindest eine zweite Detektionseinrichtung (6) signaltechnisch parallelgeschalten sind oder mittels einer logischen ODER-Verknüpfung verknüpft sind.

4. Fahrzeugsitz (1) nach einem der vorhergehenden Ansprüche,
**dadurch gekennzeichnet, dass**
die zumindest eine erste Detektionseinrichtung (5) in oder an dem Sitzteil (2) angeordnet ist, wobei die zumindest eine zweite Detektionseinrichtung (6) in oder an der Rückenlehne (3) angeordnet ist.

5. Fahrzeugsitz (1) nach einem der vorhergehenden Ansprüche
**dadurch gekennzeichnet, dass**
die zumindest eine erste Detektionseinrichtung (5) zumindest einen ersten Sensor umfasst, welcher geeignet und dazu bestimmt ist eine Belegung des Sitzteils (2) zu detektieren, wobei der erste Sensor ausgewählt ist aus der Gruppe: ein mechanischer Sensor, ein Drucksensor, ein kapazitiver Sensor, ein induktiver Sensor, ein optischer Sensor, ein Air-flow-Sensor, ein Temperatursensor, ein Ultraschall-Abstandssensor ein elektromagnetischer Sensor, wobei der zumindest eine erste Sensor auf einem ersten Mattenelement angeordnet ist.

6. Fahrzeugsitz (1) nach einem der vorhergehenden Ansprüche
**dadurch gekennzeichnet, dass**
die zumindest eine zweite Detektionseinrichtung (6) zumindest einen zweiten Sensor (8) umfasst, welcher geeignet und dazu bestimmt ist eine Belegung der Rückenlehne (3) zu detektieren, wobei der zweite Sensor (8) ausgewählt ist aus der Gruppe: ein mechanischer Sensor, ein Drucksensor, ein kapazitiver Sensor, ein induktiver Sensor, ein optischer Sensor, ein Air-flow-Sensor, ein Temperatursensor, ein Ultraschall-Abstandssensor ein elektromagnetischer Sensor, wobei der zumindest eine zweite Sensor (8) auf einem zweiten Mattenelement (7) angeordnet ist.

7. Fahrzeugsitz (1) nach einem der vorhergehenden Ansprüche,
**dadurch gekennzeichnet, dass**
die zumindest eine erste Detektionseinrichtung (5) und/oder die zumindest eine zweite Detektionseinrichtung (6) zumindest eine erstes Schaltelement (9) umfasst, wobei durch die Belegung eine Gewichtskraft auf das zumindest eine erste Schaltelement (9) wirkt, wodurch das zumindest eine erste Schaltelement (9) von einem ersten Schaltzustand in einen zweiten Schaltzustand bringbar ist.

8. Fahrzeugsitz (1) nach einem der vorhergehenden Ansprüche,
**dadurch gekennzeichnet, dass**
die zumindest eine erste Detektionseinrichtung (5) und/oder die die zumindest eine zweite Detektionseinrichtung (6) ein schwenkbar angeordnetes stangenartiges Element (10) umfasst, wobei ein zweites Schaltelement (11) vorgesehen ist, welches mit dem stangenartigen Element (10) in Wirkkontakt steht, wobei ein Vorspannelement (12) vorgesehen ist, welches das stangenartige Element (10) in einer ersten Position hält, wobei durch eine Belegung eine Kraft auf das stangenartige Element (10) ausgeübt wird, wodurch das stangenartige Element (10) zu einer zweiten Position verlagert wird, wobei durch diese Verlagerung das zweite Schaltelement (11) ebenso verlagert wird und hierdurch ein Kontaktelement (13) kontaktiert.

9. Fahrzeugsitz (1)) nach einem der vorhergehenden Ansprüche,
**dadurch gekennzeichnet, dass**
die Rückenlehne (3) mittels zweier Beschläge (14) an dem Sitzteil (2) angeordnet ist, wobei die Rückenlehne (3) relativ zu dem Sitzteil (2) verschwenkbar ist, wobei zumindest ein Beschlag (14) ein elastisches Element umfasst, dessen elastische Kraft der Verschwenkung entgegenwirkt, wobei die zumindest eine zweite Detektionseinrichtung (6) in zumindest einem Beschlag (14) angeordnet ist, wobei eine Belegung der Rückenlehne (3) aufgrund einer Verschwenkung dieser relativ zu dem Sitzteil (2) detektierbar ist.

10. Fahrzeug mit einem Fahrzeugsitz nach einem der vorhergehenden Ansprüchen 1 bis 9.
